# FASCICULE DE BREVET EUROPEEN

(11) **EP 3 104 987 B1**
(45) Date de publication et mention de la délivrance du brevet: **11.04.2018**
(21) Numéro de dépôt: 15709752.8
(22) Date de dépôt: 12.02.2015
(51) Int. Cl.: B09B 3/00, B02C 19/00, B02C 18/18, B02C 18/14

(54) **MACHINE DE TRAITEMENT DE DÉCHETS INFECTIEUX, NOTAMMENT MÉDICAUX**
MASCHINE ZUR BEHANDLUNG VON INFEKTIÖSEM ABFALL, INSBESONDERE MEDIZINISCHEM ABFALL
MACHINE FOR TREATING INFECTIOUS WASTE, IN PARTICULAR MEDICAL WASTE

(30) Priorité: 14.02.2014 FR 1451178
(43) Date de publication de la demande: 21.12.2016
(73) Titulaire: Tesalys, 69393 Lyon Cedex 03 (FR)
(72) Inventeur: HENGL, Patrick, F-31450 Issus (FR); HENGL, Emmanuel, F-31560 Calmont (FR)
(74) Mandataire: Jeannet, Olivier
(86) Numéro de dépôt international: PCT/IB2015/051058
(87) Numéro de publication internationale: WO 2015/121825

(56) Documents cités:
- WO-A1-2004/014559
- AT-A1- 506 379
- DE-U1- 9 312 163
- WiSEED: "TESALYS - Startup en vote sur WiSEED avec MIDINVEST", , 13 novembre 2013 (2013-11-13), XP054975546, Extrait de l'Internet: URL:http://www.youtube.com/watch?v=jwMvNWz czek&feature=player_detailpage [extrait le 2014-10-13]

## Description

La présente invention concerne une machine de traitement de déchets infectieux, notamment médicaux.

Il est imposé par la législation de broyer les déchets infectieux, notamment médicaux, de manière à ce qu'ils ne soient ni reconnaissables ni réutilisables, et surtout qu'ils puissent être intimement stérilisés. A cet effet, il est connu d'utiliser une machine de broyage et de stérilisation de tels déchets, comprenant une trémie supérieure de réception des déchets, un compartiment médian de broyage, et une cuve inférieure de réception, stérilisation et évacuation des déchets broyés.

Le compartiment médian de broyage inclut un broyeur formé de séries parallèles de couteaux contrarotatifs, les couteaux d'une série étant alternés avec des contre-couteaux. Les couteaux d'une série coopèrent avec les contre-couteaux d'une autre série, adjacente, et réciproquement.

Les machines existantes, de ce type, donnent globalement satisfaction mais sont néanmoins perfectibles.

En effet, un inconvénient d'une telle machine est le fait que l'efficacité du broyage qu'opère cette machine n'est pas parfaite. Il en résulte assez fréquemment que des fragments de déchets conservent une taille trop importante au regard de ce qui est requis. Une grille de calibration ou similaire doit dès lors être prévue entre le compartiment de broyage et la cuve inférieure, qui a une tendance certaine à se colmater lorsque les déchets sont humides, rendant le broyeur inopérant.

La présente invention a pour objectif principal de remédier à cet inconvénient essentiel.

La publication de demande de Modèle d'Utilité N° DE 93 12 163 U1 décrit un broyeur des déchets tels que des boîtes, des pneus, des contenants de plastique, des filtres à huile, comprenant deux séries de couteaux contrarotatifs et incluant des inserts formant des contre-couteaux. Dans la version de ce broyeur montré sur la figure 5 de ce document, il est indiqué que les contre-couteaux incluent des saillies aménagées au niveau des plaques de coupe. Ces saillies forment des portions arquées à proximité desquelles défilent les dents des couteaux ; chaque saillie a une longueur limitée, est située en aval du plan passant par les axes des séries de couteaux et contre-couteaux, et est précédée par une portion du contre-couteau située à distance des dents du couteau correspondant, de sorte qu'il existe, entre la saillie et ladite portion du contre-couteau, un léger décrochement, de faible profondeur, et en "V" très ouvert.

La machine décrite par ce document antérieur est considérée comme n'étant pas très bien adaptée au broyage requis de déchets médicaux, et comme étant inapte à remédier à l'inconvénient précité.

Le même commentaire peut être formulé à propos du document WO 2004/014559 A1.

La machine concernée par l'invention comprend, de manière connue en soi par la publication de demande de Modèle d'Utilité N° DE 93 12 163 U1, un réceptacle de chargement des déchets et un ensemble de broyage de ces déchets, incluant un broyeur, ce broyeur étant formé d'au moins deux séries parallèles de couteaux contrarotatifs, les couteaux d'une série étant alternés avec des contre-couteaux de cette même série, et les couteaux d'une première série coopérant avec les contre-couteaux d'une autre série, adjacente, et réciproquement ; les couteaux sont portés par des arbres permettant l'entraînement de ces couteaux en rotation, et les contre-couteaux d'une série sont engagés autour de ces arbres ; le bord de chaque contre-couteau tourné vers le couteau associé comprend une portion en arc de cercle située sur le côté aval du broyeur par rapport au sens de passage des déchets entre les séries de couteaux et contre couteaux, et le couteau associé comprend des dents qui défilent à proximité immédiate de cette portion. Ladite portion en arc de cercle forme une pointe dirigée du côté amont du contre couteau.

Selon l'invention,
- au moins un contre-couteau d'une série présente une partie s'étendant au-dessus de l'axe de l'arbre de cette même série, de sorte que ce contre-couteau forme un palier refermé traversé par cet arbre, cette partie du contre-couteau formant un bord en arc de cercle centré sur l'axe de l'autre arbre du broyeur, ce bord en arc de cercle complétant ladite portion en arc de cercle et faisant que les bords en arc de cercle de cette partie et de cette portion s'étendent non seulement en dessous du plan défini par l'axe des arbres mais également au-dessus de ce plan ;
- ladite portion en arc de cercle présente une entaille aménagée en elle, débouchant dans le bord en arc de cercle que forme cette portion, cette entaille formant ladite pointe.

Il sera compris que par "proximité immédiate", il est défini une distance très faible, correspondant au jeu juste suffisant pour le défilement des dents du couteau correspondant, soit environ un millimètre au plus.

L'ensemble des caractéristiques précitées permet de constituer une zone étendue de défilement des dents du couteau associé à proximité des bords en arc de cercle du contre-couteau, et ladite pointe formée par ladite entaille constitue une zone d'accrochage d'un fragment de déchet présent entre le couteau et le contre-couteau. Cette pointe permet ainsi de retenir ce fragment jusqu'au passage de la dent consécutive du couteau en regard de cette pointe, ce qui permet de réaliser un cisaillage ou un déchiquetage supplémentaire de ce fragment.

Lorsque l'ensemble des contre-couteaux que comprend le broyeur présente une telle entaille, et donc une telle pointe, le broyeur comprend non seulement une première zone de cisaillage au niveau des dents des couteaux et une deuxième zone de cisaillage entre les arêtes des dents des couteaux et les arêtes supérieures des contre-couteaux, mais également une troisième zone de cisaillage entre lesdites pointes et lesdites dents consécutives des couteaux mais aussi une quatrième zone active, constituée par la disposition alternée desdites pointes d'un contre-coteau à un contre-couteau adjacent. Ces pointes constituent des zones de calibrage sous la forme d'une sorte de peigne, qui permettent aux déchets broyés d'être de nouveau entrainés dans les zones de cisaillage citées précédemment pour peu que ces déchets aient des dimensions supérieures aux dimensions de la zone de passage initialement définie.

L'efficacité du broyage obtenu est ainsi grandement améliorée et permet d'éliminer toute nécessité d'un calibrage en aval du broyeur.

De préférence, les bords en arc de cercle de ladite partie et de ladite portion du contre-couteau forment conjointement une zone en arc de cercle s'étendant sur un arc d'environ trente degrés, de préférence de trente degrés.

De préférence, ladite entaille est délimitée, sur son côté le plus proche de l'axe de l'arbre traversant ledit contre-couteau, par un bord droit du contre-couteau, dirigé perpendiculairement au plan défini par les axes desdits arbres, et, sur son côté le plus éloigné de cet axe, par un bloc bord oblique.

Cette forme d'entaille est particulièrement efficiente.

De préférence, ledit bord droit et ledit bord oblique sont rectilignes et forment entre eux un angle de l'ordre d'une quarantaine de degrés, de préférence de quarante degrés.

Selon un autre aspect,
- le réceptacle de chargement des déchets présente une section transversale constante entre une ouverture de chargement des déchets et une ouverture de communication avec le broyeur ; et
- la machine comprend un moyen de poussée permettant de pousser les déchets en direction de ce broyeur, sous la forme d'une plaque mobile en translation dans le réceptacle de chargement des déchets, parallèlement à l'axe selon lequel ce réceptacle présente ladite section transversale constante, cette plaque ayant des dimensions telles qu'il existe seulement un interstice entre la tranche de la plaque et les parois délimitant ledit réceptacle de chargement des déchets ; la plaque est mobile entre une position de retrait, dans laquelle elle est apte à être dégagée de ladite ouverture de chargement des déchets, et une position de fin de course, dans laquelle elle est située aux abords de ladite ouverture de communication.

La plaque permet ainsi, par son déplacement, de pousser l'ensemble des déchets vers le compartiment de broyage, sans nécessité d'actionnement répété par un opérateur comme avec un manche selon la technique antérieure. L'interstice que forme cette plaque avec les parois du réceptacle élimine le risque que des déchets, ou des fragments de déchets remontant du broyeur, passent au-dessus d'elle. Dans ladite position de fin de course, il n'y a plus de risque que des fragments de déchets broyés se coincent entre la plaque et les parois du réceptacle, et la machine ne comprend aucun siège creux dans lequel de tels fragments sont susceptibles de s'accumuler.

En outre, la plaque, de par sa structure, rend possible que le réceptacle de chargement des déchets soit désinfecté et stérilisé par les mêmes moyens de désinfection et de stérilisation que ceux réalisant la désinfection et la stérilisation du compartiment de broyage et, lorsque la machine en comprend une, de la cuve inférieure de réception, stérilisation et évacuation des déchets broyés.

De préférence, la machine comprend un joint d'étanchéité mobile entre une position rétractée, dans laquelle ce joint ne fait pas obstacle à la mobilité de la plaque dans le réceptacle de chargement des déchets, et une position d'étanchéité, dans laquelle ce joint réalise, dans ladite position de fin de course de la plaque, une étanchéité entre la plaque et les parois de ce réceptacle.

Tout risque de remontée de fragments de déchets dans le réceptacle de chargement des déchets est ainsi éliminé. De plus, ce joint permet de séparer momentanément ce réceptacle et le compartiment de broyage, pour la réalisation d'une désinfection et d'une stérilisation du compartiment de broyage à des conditions non requises pour ledit réceptacle.

Ce joint d'étanchéité peut notamment être gonflable, de sorte que le passage de ce joint de ladite position rétractée à ladite position d'étanchéité se fasse par gonflage de ce joint et qu'inversement, le passage de ce joint de ladite position d'étanchéité à ladite position rétractée se fasse par dégonflage de ce joint.

Selon une possibilité, le joint d'étanchéité est logé dans un siège aménagé dans les parois délimitant le réceptacle de chargement des déchets. Dans ladite position d'étanchéité, ce joint vient alors s'appliquer sur la tranche de ladite plaque, cette tranche étant lisse.

Selon une autre possibilité, le joint d'étanchéité est logé dans un siège aménagé dans la tranche de ladite plaque et vient alors s'appliquer, dans ladite position d'étanchéité, sur les parois délimitant le réceptacle de chargement des déchets. Ces parois sont alors lisses, de sorte qu'aucun risque d'accumulation de fragments de déchets n'existe. Le joint peut, en position rétractée légèrement frotter contre les parois du réceptacle et former ainsi un moyen de raclage de ces parois.

La machine peut comprendre des moyens de blocage de la plaque dans ladite position de fin de course, notamment sous la forme d'au moins un verrou mettant en engagement la plaque et au moins une des parois délimitant ledit réceptacle de chargement des déchets.

Ces moyens de blocage immobilisent la plaque dans cette position fin de course et réduisent fortement, ou éliminent, l'exercice d'efforts d'usure sur le joint.

De préférence, dans ladite position de retrait, la plaque est entièrement logée dans un couvercle que comprend la machine, ce couvercle étant mobile entre une position de recouvrement de ladite ouverture de chargement des déchets, dans laquelle il clos cette ouverture, et une position d'effacement, dans laquelle il ne fait pas obstacle au chargement des déchets dans ledit réceptacle.

La plaque peut ainsi être totalement dégagée de cette ouverture, laquelle permet un chargement aisé des déchets.

De préférence, les moyens d'actionnement de la plaque comprennent au moins deux séries de ciseaux reliés les uns aux autres, sur deux côtés opposés de la plaque.

De tels ciseaux permettent de parfaitement guider la plaque entre ses positions précitées de retrait et de fin de course.

Selon un autre aspect,
- le broyeur est logé dans un tiroir mobile en coulissement à l'intérieur d'un compartiment de réception que comprend la structure de la machine, ce compartiment de réception étant délimité par des parois latérales et par une paroi postérieure, qui comprend une ouverture ;
- le tiroir présente un bossage distal apte, en position de complet engagement de ce tiroir dans ledit compartiment de réception, à être engagé de manière ajustée dans ladite ouverture que comprend ladite paroi postérieure ;
- la machine comprend un capot apte à envelopper la partie du bossage distal qui dépasse de ladite paroi postérieure en position de complet engagement du tiroir dans ledit compartiment de réception, ce capot étant pourvu d'une bride destinée à être boulonnée sur ladite paroi postérieure, cette bride présentant, au niveau de son bord interne, un surface biseautée, et
- la machine comprend un joint apte à être engagé de manière ajustée autour de ladite partie du bossage distal qui dépasse de ladite paroi postérieure en position de complet engagement du tiroir dans ledit compartiment de réception, jusqu'à être au contact de ladite paroi postérieure et à être écrasé par ladite surface biseautée du capot lorsque ce capot est boulonné à ladite paroi postérieure.

Le montage du broyeur dans la machine est ainsi réalisé en engageant le tiroir qui contient ce broyeur dans le compartiment de broyage, jusqu'à engagement ajusté dudit bossage distal au travers de ladite ouverture que comprend ladite paroi postérieure. Le joint est ensuite mis en place autour de ce bossage jusqu'à être en contact de cette paroi postérieure, puis le capot est mis en place sur le bossage et est boulonné à cette paroi postérieure de manière à réaliser l'écrasement du joint. L'aspect consiste donc à prévoir deux structures autour du broyeur, ledit tiroir et ledit compartiment de réception, et à prévoir une liaison distale très résistante de ce tiroir à ce compartiment de réception, par écrasement dudit joint sur l'ensemble de sa périphérie. Cette liaison permet de créer une étanchéité entre l'intérieur et l'extérieur de la cuve. De plus, cette liaison permet de réaliser un blocage mécanique isostatique desdites deux structures, qui permet, si la géométrie du broyeur ou de la cuve n'était pas parfaite (ce qui peut arriver compte tenu du fait que certaines de ces pièces sont fabriquées par mécano soudure), de rattraper le jeu excessif qui existerait alors entre la partie postérieure du broyeur et ladite ouverture. Ce même blocage mécanique isostatique permet également de rattraper un défaut de perpendicularité ou de parallélisme entre la face d'appui contre le joint et ledit. En d'autres termes, le joint, lors de son écrasement, ne créera pas de contraintes sur le broyeur et se contentera de prendre place de manière plastique autour dudit bossage que comprend le broyeur.

Selon encore un autre aspect,
- le broyeur est formé d'au moins deux séries parallèles de couteaux contrarotatifs, les couteaux d'une série étant alternés avec des contre-couteaux de cette même série, et les couteaux d'une première série coopérant avec les contre-couteaux d'une autre série, adjacente, et réciproquement ; et
- au moins un couteau comprend au moins une alvéole débouchant dans au moins une de ses faces tournée vers le contre-couteau adjacent, ou au moins un contre-couteau comprend au moins une alvéole débouchant dans au moins une de ses faces tournée vers le couteau adjacent, cette alvéole étant destinée à être remplie de graisse de lubrification et à former ainsi une réserve de graisse.

Ainsi, lorsqu'une série de cycles de stérilisation et désinfection mettant en oeuvre un fluide chaud, en particulier de la vapeur d'eau, tend à réduire, voire à faire disparaître, la quantité de graisse présente dans l'interface entre un couteau et le contre-couteau adjacent, la rotation ultérieure du couteau par rapport au contre-couteau adjacent réalise un prélèvement de graisse dans cette alvéole du fait de la viscosité de cette graisse, et donc un rechargement de cette interface en graisse. Il en résulte que les interruptions de la machine pour recharger les interfaces des couteaux et contre-couteaux en graisse peuvent être nettement espacées.

Une telle alvéole peut déboucher dans une seule desdites faces d'un couteau ou d'un contre-couteau ; de préférence, toutefois, cette alvéole débouche dans les deux faces d'un couteau ou d'un contre-couteau.

De préférence, une alvéole est aménagée dans chaque contre-couteau et débouche dans les deux faces de ce contre-couteau.

L'invention sera bien comprise, et d'autres caractéristiques et avantages de celle-ci apparaîtront, en référence au dessin schématique annexé, représentant, à titre d'exemple non limitatif, une forme de réalisation préférée de la machine concernée.

Dans ce dessin,
la figure 1 est une vue de cette machine de côté, en coupe longitudinale, une plaque de pression que comprend cette machine étant dans une position de retrait ;
la figure 2 est une vue de la machine similaire à la figure 1, ladite plaque de pression étant dans une position de fin de course d'abaissement ;
la figure 3 est une vue très agrandie de la portion de la machine située au niveau de cette position de fin de course, ladite plaque de pression n'étant pas dans cette même position ;
la figure 4 est une vue similaire à la figure 3, ladite plaque de pression étant dans ladite position de fin de course ;
la figure 5 est une vue en perspective d'un ensemble de broyage et d'une cuve inférieure de réception des déchets broyés, que comprend la machine ;
la figure 6 est une vue de cet ensemble de broyage en coupe transversale et à échelle agrandie ;
la figure 7 est une vue en éclaté de différents organes constituant le broyeur que comprend la machine ;
la figure 8 est une vue du compartiment de broyage similaire à la figure 6, en coupe longitudinale passant par l'un des arbres que comprend le broyeur ;
la figure 9 est une vue en section, de face, d'un couteau et d'un contre-couteau que comprend le broyeur ;
la figure 10 est une vue de la machine de côté, en coupe longitudinale, selon une variante de réalisation d'un joint d'étanchéité que comprend ladite plaque de pression, et
la figure 11 est une vue à échelle agrandie d'un détail apparaissant sur cette figure 10.

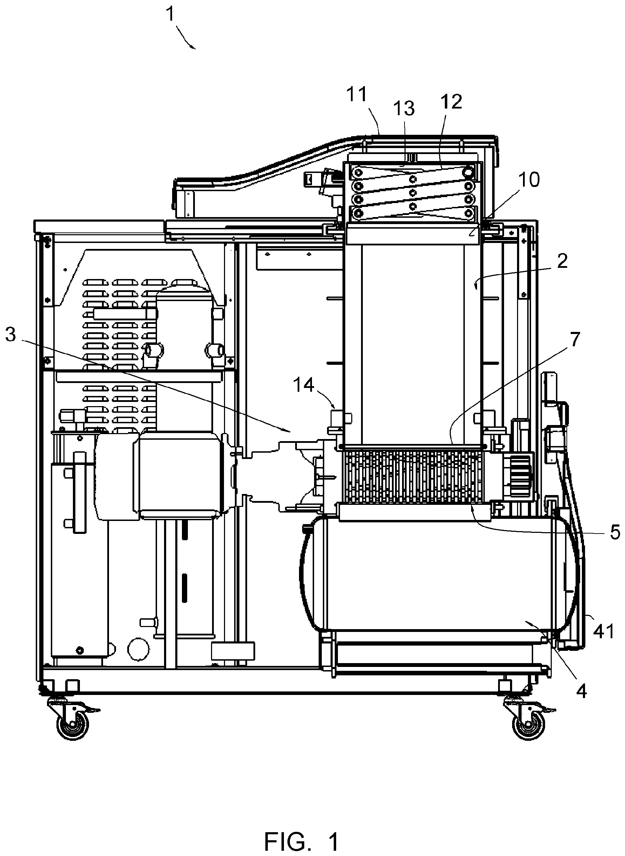

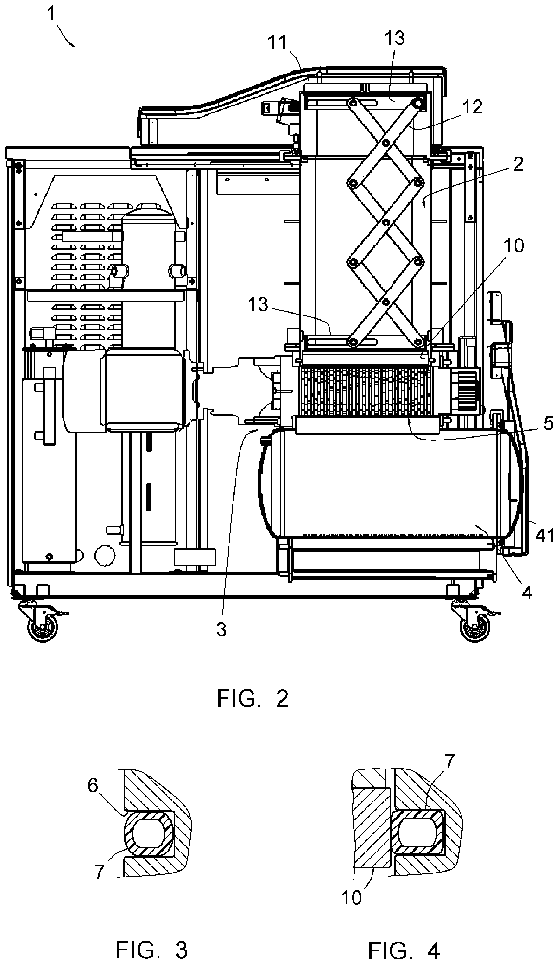

Les figures 1 et 2 représentent une machine 1 de traitement de déchets infectieux, notamment médicaux, comprenant essentiellement un réceptacle 2 de chargement des déchets, un ensemble 3 de broyage de ces déchets et une cuve inférieure 4 de réception, stérilisation et évacuation des déchets broyés. Les autres éléments visibles sur ces figures (armoire électrique, centrale de génération de vapeur, etc.) sont bien connus en eux-mêmes et ne font pas partie de l'invention ; ils ne seront donc pas particulièrement décrits.

Le réceptacle 2 présente une section transversale constante entre une ouverture supérieure de chargement des déchets et une ouverture inférieure de communication avec un compartiment de broyage, contenant un broyeur 5, que comprend l'ensemble de broyage 3.

Dans la version de la machine montrée sur les figures 1 à 4, le réceptacle 2 comprend, légèrement en retrait de cette ouverture inférieure, un siège en creux 6 (cf. figures 3 et 4) dans lequel est placé un joint gonflable 7. Ce joint 7, connu dans son principe, délimite une chambre intérieure fermée qui est reliée à une source de fluide sous pression (non représentée). L'alimentation de cette chambre par ce fluide permet de dilater le joint 7, le faisant passer d'une position rétractée, visible sur la figure 3, dans laquelle ce joint ne fait pas saillie du siège 6, et une position d'étanchéité, visible sur la figure 4, dans laquelle ce joint fait saillie du siège 6 et vient en application contre la tranche d'une plaque de pression 10, décrite plus loin, réalisant ainsi une étanchéité entre cette plaque 10 et les parois de ce réceptacle 2.

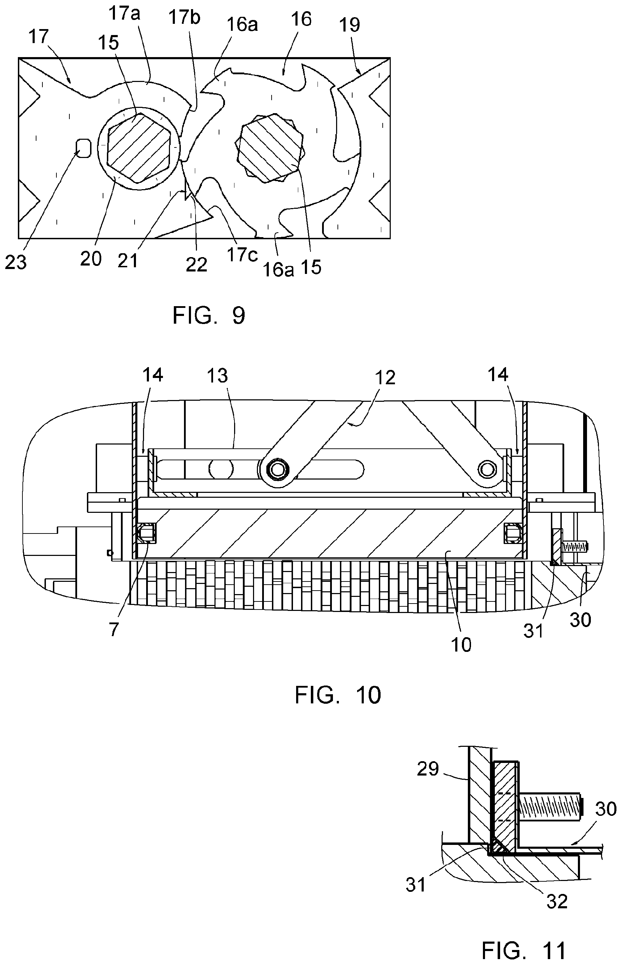

Dans la variante de réalisation de la machine 1 montrée sur la figure 10, le siège 6, contenant le joint 7, est aménagé dans la tranche de la plaque 10 et les portions des parois du réceptacle 2 situées légèrement en retrait de ladite ouverture inférieure sont lisses et dans la continuité du reste des parois du réceptacle 2.

En association au réceptacle 2, la machine comprend un ensemble de pression des déchets dans ce réceptacle, et un couvercle coulissant supérieur 11.

L'ensemble de pression des déchets comprend ladite plaque de pression 10, deux séries de croisillons 12 et des structures 13 de liaison de ces séries de croisillons 12 à la plaque 10, d'une part, et au couvercle 11, d'autre part.

Comme le montrent les figures 1, 2 et 10, la plaque de pression 10 a des dimensions telles qu'il existe seulement un interstice entre sa tranche et les parois délimitant le réceptacle 2. Cette plaque 10 est mobile en translation dans le réceptacle 2, au moyen du dépliage/repliage des croisillons 12, parallèlement à l'axe selon lequel ce réceptacle 2 présente ladite section transversale constante. Cette mobilité se fait entre une position supérieure de retrait, montrée sur la figure 1, dans laquelle elle est entièrement rétractée dans le couvercle 11, et une position inférieure de fin de course, montrée sur la figure 2, dans laquelle elle est située aux abords de ladite ouverture de communication, et dans laquelle le joint 7 est apte à réaliser l'étanchéité précitée.

Le couvercle 11 est creux intérieurement, de manière à loger la plaque 10, les séries de croisillons 12, lesdites structures de liaison 13 et un vérin d'actionnement des croisillons 12. Il est mobile en coulissement entre la position représentée, de recouvrement total de l'ouverture de chargement des déchets, dans laquelle il clos cette ouverture avec étanchéité, et une position latérale d'effacement, dans laquelle il libère entièrement ladite ouverture et ne fait donc pas obstacle au chargement des déchets dans le réceptacle 2.

Lesdites structures de liaison 13 sont formées de cadres faits de profilés en cornières ; les parois sur lesquelles sont montées les branches des croisillons 12 respectifs comprennent des lumières permettant que le point de pivotement d'une branche du croisillon 12 correspondant puisse se rapprocher et s'éloigner du point de pivotement de l'autre branche de ce même croisillon.

La machine 1 comprend également des verrous 14 montés sur deux parois en vis-à-vis du réceptacle 2, dont les pênes sont, dans ladite position inférieure de fin de course, reçus dans des gâches correspondantes aménagées dans les cadres formant lesdites structures de liaison 13.

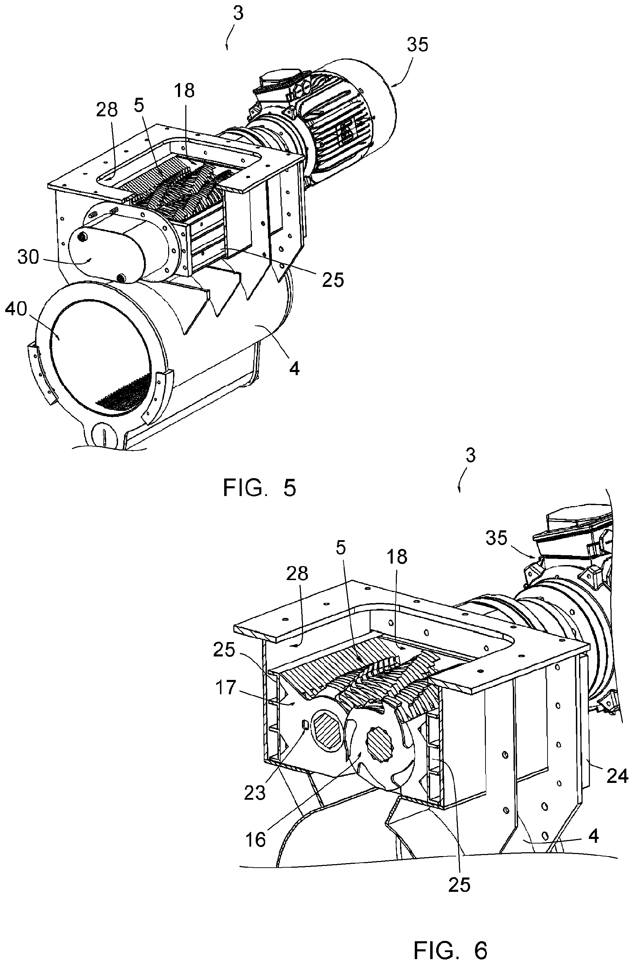

En référence aux figures 5 à 8, il apparaît que l'ensemble 3 de broyage des déchets comprend essentiellement le broyeur 5, formé de deux arbres 15 parallèles comportant chacun une série de couteaux 16 et de contre-couteaux 17 alternés, un compartiment de broyage 18 logeant ce broyeur 5, et un ensemble d'actionnement de ces arbres 15 de manière contrarotative.

Les couteaux 16 d'une série coopèrent avec les contre-couteaux 17 de l'autre autre série, et réciproquement, comme particulièrement visible sur la figure 9.

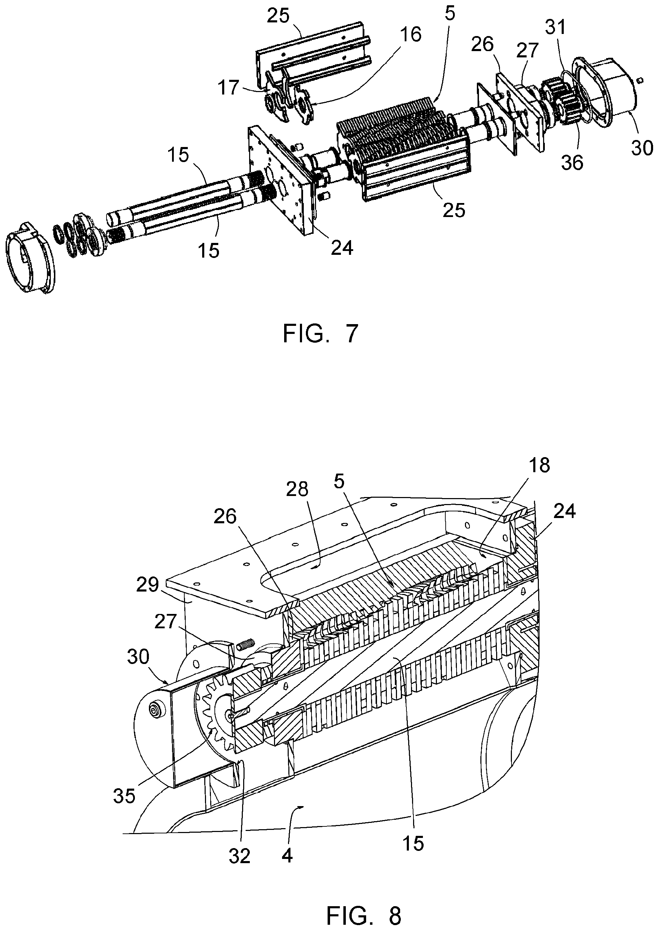

En référence à cette figure 9, il apparaît que les arbres 15 ont une section hexagonale et que chaque couteau 16 présente une ouverture centrale formée par la superposition de deux lumières hexagonales, décalées de 30° l'une par rapport à l'autre, les dimensions de ces lumières étant telles qu'elles permettent l'engagement ajusté, et le calage, des couteaux 16 sur les arbres 15. Comme cela est visible particulièrement sur la figure 8, les couteaux 16 successifs d'une même série sont décalés de 30 degrés, d'un couteau à un couteau adjacent dans la même série.

Chaque couteau 16 présente cinq dents saillantes 16a, formant des arêtes tranchantes.

Chaque contre-couteau 17 présente une partie 17a s'étendant au-dessus de l'axe de l'arbre 15 de la même série de couteaux 16 et contre-couteaux 17, de sorte que ce contre-couteau 17 forme un palier refermé traversé par cet arbre 15. Cette partie 17a du contre-couteau forme un bord 17b en arc de cercle centré sur l'axe de l'autre arbre 15 du broyeur. Le contre-couteau 17 comprend également une portion 17c formant un bord en arc de cercle, située en dessous du plan défini par les axes des arbres 15. Le bord 17b et la portion 17c forment conjointement une zone étendue, en arc de cercle, s'étendant sur un arc d'environ trente degrés, à proximité immédiate de laquelle défilent les dents 16a du couteau 16 associé lorsque ce couteau est entraîné en rotation.

Le contre-couteau 17 comprend aussi une ouverture circulaire dans laquelle est logée une bague de glissement 20 à ouverture hexagonale et périphérie circulaire, cette bague de glissement 20 étant montée sur l'arbre 15 et coopérant avec le palier précité formé par le contre-couteau 17. Ce dernier n'est ainsi pas mobile dans le compartiment 18 lorsque l'arbre 15 correspondant est entraîné en rotation.

Du côté opposé au contre-couteau 17 par rapport au couteau 16, le broyeur 5 présente un contre-couteau complémentaire 19.

Le contre-couteau 17 présente une entaille 21 aménagée dans sa portion 17c, débouchant dans le bord en arc de cercle formé par cette portion. Cette entaille 21 est délimitée, sur son côté le plus proche de l'axe de l'arbre 15 traversant le contre-couteau 17, par un bord droit de ce contre-couteau, dirigé perpendiculairement au plan défini par les axes des arbres 15, et, sur son côté le plus éloigné de cet axe, par un bloc bord oblique. Ce bord droit et ce bord oblique sont rectilignes et forment entre eux un angle de l'ordre d'une quarantaine de degrés. Cette entaille 21 forme ainsi une pointe 22 dirigée du côté amont du contre-couteau 17.

Le contre-couteau 17 comprend également une alvéole 23 débouchant dans les deux faces du contre-couteau 17 tournées vers les couteaux 16 qui sont adjacents à ce contre-couteau 17 dans la même série de couteaux et de contre-couteaux. Cette alvéole 23 est remplie de graisse de lubrification et forme ainsi une réserve de graisse, comme explicité plus loin.

Le contre-couteau 19 présente également un bord en arc de cercle tourné vers le couteau 16 associé, le long duquel défilent les dents que comprend ce couteau 16. Il est fixé sur une paroi 25 délimitant latéralement le compartiment de broyage 18.

En référence aux figures 5 à 8, il apparaît que ce compartiment 18 est délimité par une paroi antérieure 24, deux parois latérales 25 et une paroi postérieure 26 comportant un bossage distal 27. A l'état assemblé, l'ensemble forme un tiroir qui prend place dans un compartiment de réception 28 ayant des dimensions ajustées à celle de ce tiroir, les parois délimitant ce compartiment de réception 28 formant corps avec la cuve 4. Ce compartiment de réception 28 est notamment délimité par une paroi postérieure 29 qui comprend une ouverture apte à recevoir le bossage 27 de manière ajustée en position de complet engagement du tiroir, et qui comprend également une série de tiges filetées fixées à elle autour de cette ouverture.

La machine 1 comprend également un capot 30 et un joint 31.

Le capot 30 est dimensionné pour envelopper le bossage 27 de manière ajustée et est pourvu d'une bride destinée à être engagée sur les tiges filetées solidaire de la paroi 29 et à être boulonnée à cette dernière. Comme le montre particulièrement la figure 11, cette bride présente, au niveau de son bord interne, une surface biseautée 32.

Le joint 31 est en anneau et est dimensionné pour être engagé de manière ajustée autour du bossage 27 jusqu'à être au contact de ladite paroi postérieure 29. Lorsque le capot 30 est boulonné à cette dernière, la surface biseautée 32 vient écraser ce joint 31 sur l'ensemble de sa périphérie, comme visible plus particulièrement sur la figure 11.

L'ensemble d'actionnement du broyeur 5 inclut un moteur 35 agissant sur l'un des arbres 15, et deux pinions 36, calés sur les arbres 15 et engrenant l'un avec l'autre de telle sorte que l'entraînement d'un arbre 15 généré par le moteur 35 se transmette à l'autre arbre 15.

La cuve 4, quant à elle, présente une ouverture longitudinale 40 par laquelle les déchets broyés peuvent être retirés d'elle. Cette ouverture 40 est fermée par un couvercle coulissant 41, mobile entre une position de clôture étanche de cette ouverture et une position d'effacement, dans laquelle ce couvercle 41 libère complètement cette ouverture.

Comme cela se comprend, la plaque 10 permet, par son déplacement, de pousser l'ensemble des déchets vers le compartiment de broyage 18, sans nécessité d'actionnement répété par un opérateur comme avec un manche selon la technique antérieure. L'interstice que forme cette plaque 10 avec les parois du réceptacle 2 élimine, conjointement à l'étanchéité rendu possible par le joint 7, tout risque que des déchets, ou des fragments de déchets, remontent du broyeur 5 et passent au-dessus de cette plaque 10, ni que de tels déchets ou fragments ne s'accumulent dans un siège creux. Les ciseaux 12 permettent de parfaitement guider la plaque 10 entre ses positions de retrait et de fin de course, prévenant tout risque de coincement de cette plaque dans ce réceptacle.

La plaque 10 et le joint 7 permettent en outre de séparer momentanément le réceptacle 2 et le compartiment de broyage 18, pour la réalisation d'une désinfection et d'une stérilisation du compartiment de broyage 18 à des conditions non requises pour le réceptacle 2. Les verrous 14 immobilisent la plaque 10 dans cette position de fin de course, ce qui protège le joint 7 contre les efforts d'usure générés par cette désinfection et stérilisation.

Le montage du broyeur 5 dans la machine 1 est réalisé en engageant le tiroir qui contient ce broyeur dans le compartiment de réception 28, jusqu'à engagement ajusté du bossage 27 au travers de l'ouverture de passage aménagée dans la paroi postérieure 29. Le joint 31 est ensuite mis en place autour de ce bossage 27 jusqu'à être en contact de cette paroi postérieure 29, puis le capot 30 est mis en place de manière ajustée sur le bossage 27 et est boulonné à la paroi 29 de manière à réaliser l'écrasement du joint 31 par la paroi biseautée 32.

Deux structures sont ainsi prévues autour du broyeur 5, ledit tiroir 25 et ledit compartiment de réception 28, et l'écrasement du joint 31 sur l'ensemble de sa périphérie, par le capot 30, permet de réaliser une liaison distale très résistante et isostatique de ce tiroir à ce compartiment de réception. Cette liaison est apte à parfaitement résister aux efforts répétés subis par le broyeur 5, tout en permettant un démontage facile du broyeur, par simple démontage du capot 30 et retrait du joint 31 d'autour du bossage 27.

Chaque alvéole 23 permet un rechargement de l'interface entre un contre-couteau 17 et les deux couteaux 16 adjacents lorsqu'une série de cycles de stérilisation et de désinfection mettant en oeuvre de la vapeur d'eau, tend à réduire voire à faire disparaître la quantité de graisse présente dans ces interfaces. Il en résulte que les interruptions de l'utilisation de la machine 1 pour recharger les interfaces des couteaux 16 et contre-couteaux 17 en graisse peuvent être nettement espacées.

Par ailleurs, la pointe 22 constitue une zone d'accrochage d'un fragment de déchet présent entre un couteau 16 et un contre-couteau 17 et permet de retenir ce fragment jusqu'au passage de la dent consécutive du couteau 16 en regard de cette pointe 22, ce qui permet de réaliser un cisaillage ou un déchiquetage supplémentaire de ce fragment. L'efficacité du broyage obtenu est grandement améliorée et permet d'éliminer toute nécessité d'un tamisage en aval du broyeur 5.

Comme cela apparaît de ce qui précède, l'invention fournit une machine 1 présentant des avantages déterminants, précités, par rapport aux machines homologues de la technique antérieure.

Il va de soi que l'invention n'est pas limitée à la forme de réalisation décrite ci-dessus à titre d'exemple mais qu'elle s'étend à toutes les formes de réalisation couvertes par les revendications ci-annexées.

## Revendications

1. Machine (1) de traitement de déchets infectieux, notamment médicaux, comprenant un réceptacle (2) de chargement des déchets et un ensemble (3) de broyage de ces déchets, incluant un broyeur (5), ce broyeur étant formé d'au moins deux séries parallèles de couteaux (16) contrarotatifs, les couteaux (16) d'une série étant alternés avec des contre-couteaux (17) de cette même série, et les couteaux (16) d'une première série coopérant avec les contre-couteaux (17) d'une autre série, adjacente, et réciproquement; les couteaux (16) sont portés par des arbres (15) permettant l'entraînement de ces couteaux en rotation, et les contre-couteaux (17) d'une série sont engagés autour de ces arbres (15) ; le bord de chaque contre-couteau (17) tourné vers le couteau (16) associé comprend une portion (17c) en arc de cercle située sur le côté aval du broyeur par rapport au sens de passage des déchets entre les séries de couteaux (16) et contre couteaux (17), et le couteau (16) associé comprend des dents (16a) qui défilent à proximité immédiate de cette portion (17c) ;
ladite portion (17c) en arc de cercle forme une pointe (22) dirigée du côté amont du contre-couteau (17) ;
**caractérisée en ce que** :
- au moins un contre-couteau (17) d'une série présente une partie (17a) s'étendant au-dessus de l'axe de l'arbre (15) de cette même série, de sorte que ce contre-couteau (17) forme un palier refermé traversé par cet arbre, cette partie (17a) du contre-couteau (17) formant un bord (17b) en arc de cercle centré sur l'axe de l'autre arbre (15) du broyeur, ce bord (17b) en arc de cercle complétant ladite portion (17c) en arc de cercle et faisant que les bords en arc de cercle de cette partie (17a) et de cette portion (17c) s'étendent non seulement en dessous du plan défini par l'axe des arbres (15) mais également au-dessus de ce plan ;
- ladite portion (17c) en arc de cercle présente une entaille (21) aménagée en elle, débouchant dans le bord en arc de cercle que forme cette portion (17c), cette entaille (21) formant ladite pointe (22).

2. Machine (1) selon la revendication 1, **caractérisée en ce que** l'ensemble des contre-couteaux (17) que comprend le broyeur (5) présente une telle entaille (21), et donc une telle pointe (22).

3. Machine (1) selon la revendication 1 ou la revendication 2, **caractérisée en ce que** les bords en arc de cercle de ladite partie (17a) et de ladite portion (17c) du contre-couteau (17) forment conjointement une zone en arc de cercle s'étendant sur un arc d'environ trente degrés.

4. Machine (1) selon l'une des revendications 1 à 3, **caractérisée en ce que** ladite entaille (21) est délimitée, sur son côté le plus proche de l'axe de l'arbre (15) traversant ledit contre-couteau (17), par un bord droit du contre-couteau, dirigé perpendiculairement au plan défini par les axes desdits arbres (15), et, sur son côté le plus éloigné de cet axe, par un bloc bord oblique.

5. Machine (1) selon la revendication 4, **caractérisée en ce que** ledit bord droit et ledit bord oblique sont rectilignes et forment entre eux un angle de l'ordre d'une quarantaine de degrés.

## Patentansprüche

1. Maschine (1) zur Behandlung von infektiösem Abfall, insbesondere medizinischem Abfall, die einen Behälter (2) zum Laden des Abfalls und eine Baugruppe (3) zur Zerkleinerung dieses Abfalls umfasst, die einen Zerkleinerer (5) umfasst, wobei dieser Zerkleinerer aus mindestens zwei parallelen Reihen von gegenläufig drehenden Messern (16) gebildet ist, wobei die Messer (16) einer Reihe sich mit Gegenmessern (17) dieser selben Reihe abwechseln und die Messer (16) einer ersten Reihe mit den Gegenmessern (17) einer anderen, benachbarten Reihe zusammenwirken und umgekehrt; die Messer (16) von Wellen (15) getragen werden, die den drehbaren Antrieb dieser Messer ermöglichen, und die Gegenmesser (17) einer Reihe um diese Wellen (15) in Eingriff sind; der Rand von jedem Gegenmesser (17), der dem zugehörigen Messer (16) zugewandt ist, einen kreisbogenförmigen Abschnitt (17c) umfasst, der sich in Bezug auf die Durchgangsrichtung des Abfalls zwischen den Reihen von Messern (16) und Gegenmessern (17) auf der nachgeschalteten Seite des Zerkleinerers befindet, und das zugehörige Messer (16) Zähne (16a) umfasst, die in unmittelbarer Nähe dieses Abschnitts (17c) vorbeilaufen;
der kreisbogenförmige Abschnitt (17c) eine Spitze (22) bildet, die zur vorgeschalteten Seite des Gegenmessers (17) gerichtet ist;
**dadurch gekennzeichnet, dass**:
- mindestens ein Gegenmesser (17) von einer Reihe einen Teil (17a) aufweist, der sich über der Achse der Welle (15) dieser selben Reihe erstreckt, derart, dass dieses Gegenmesser (17) ein geschlossenes Lager bildet, das von dieser Welle durchquert wird, wobei dieser Abschnitt (17a) des Gegenmessers (17) einen kreisbogenförmigen Rand (17b) bildet, der auf die Achse der anderen Welle (15) des Zerkleinerers zentriert ist, wobei dieser kreisbogenförmige Rand (17b) den kreisbogenförmigen Abschnitt (17c) ergänzt und bewirkt, dass die kreisbogenförmigen Ränder dieses Teils (17a) und dieses Abschnitts (17c) sich nicht nur unter der Ebene, die durch die Achse der Wellen (15) bestimmt ist, sondern auch über dieser Ebene erstrecken;
- der kreisbogenförmige Abschnitt (17c) eine Kerbe (21) aufweist, die in ihm eingerichtet ist, die in dem kreisbogenförmigen Rand mündet, den dieser Abschnitt (17c) bildet, wobei diese Kerbe (21) die Spitze (22) bildet.

2. Maschine (1) nach Anspruch 1, **dadurch gekennzeichnet, dass** sämtliche Gegenmesser (17), die der Zerkleinerer (5) umfasst, eine solche Kerbe (21) und somit eine solche Spitze (22) aufweisen

3. Maschine (1) nach Anspruch 1 oder Anspruch 2, **dadurch gekennzeichnet, dass** die kreisbogenförmigen Ränder des Teils (17a) und des Abschnitts (17c) des Gegenmessers (17) gemeinsam eine kreisbogenförmige Zone bilden, die sich über einen Bogen von ungefähr dreißig Grad erstreckt.

4. Maschine (1) nach einem der Ansprüche 1 bis 3, **dadurch gekennzeichnet, dass** die Kerbe (21) auf ihrer Seite, die am nächsten an der Achse der Welle (15) liegt, die das Gegenmesser (17) durchquert, durch einen geraden Rand des Gegenmessers, der senkrecht zur Ebene gerichtet ist, die durch die Achsen der Wellen (15) bestimmt ist, und auf ihrer von dieser Achse am weitesten entfernten Seite durch einen schrägen Randblock begrenzt ist.

5. Maschine (1) nach Anspruch 4, **dadurch gekennzeichnet, dass** der gerade Rand und der schräge Rand geradlinig sind und zwischen sich einen Winkel in der Größenordnung von etwa vierzig Grad bilden.

## Claims

1. Machine (1) for treating infectious waste, in particular medical waste, comprising a receptacle (2) for loading waste and a shredding assembly (3) for shredding said waste, including a shredder (5), this shredder (5) being formed by at least two parallel series of contrarotating knives (16), the knives (16) of one series alternating with counter-knives (17) of that same series, and the knives (16) of a first series cooperating with the counter-knives (17) of another adjacent series, and vice versa; the knives (16) are carried by shafts (15) for driving these knives to rotate, and the counter-knifes (17) of one series are engaged around these shafts (15); the edge of each counter-knife (17) facing the opposite knife (16) associated thereto comprises an arcuate portion (17c) located on the downstream side of the shredder relative to the direction of passage of waste material between the series of knives (16) and counter-knives (17), and said opposite knife (16) comprises teeth (16a) that pass in the immediate vicinity of that arcuate portion (17c);
said arcuate portion (17c) forms a tip (22) oriented toward the upstream side of the counter-knife (17);
**characterized in that**:
- at least one counter-knife (17) of one series has a portion (17a) extending above the axis of the shaft (15) of the same series, so that this counter-knife (17) forms a closed bearing traversed by this shaft, this portion (17a) of the counter-knife (17) forming an arcuate edge (17b) centered on the axis of another shaft (15) of the shredder, this arcuate edge (17b) completing said arcuate portion (17c) and making the arcuate edges of said portions (17a, 17c) extend not only below the plane defined by the axis of the shafts (15) but also above this plan;
- said arcuate portion (17c) has a notch (21) formed on it, opening into the arcuate edge formed by this arcuate portion (17c), this notch (21) forming said tip (22).

2. Machine (1) according to claim 1, **characterized in that** all the counter-knives (17) comprised by the shredder (5) has such a notch (21), and therefore such a tip (22).

3. Machine (1) according to claim 1 or claim 2, **characterized in that** the edges of said arcuate portion (17a) and of said portion (17c) of the counter-knife (17) jointly form a circular arcuate zone extending over an arc of approximately thirty degrees.

4. Machine (1) according to anyone of claims 1-3, **characterized in that** said notch (21) is delimited on its side closest to the axis of the shaft (15) crossing said counter-knife (17), by a straight edge of the counter-knife, directed perpendicularly to the plane defined by the axes of said shafts (15), and, on its side opposite from this axis, by an oblique edge.

5. Machine (1) according to claim 4, **characterized in that** said straight edge and said oblique edge are rectilinear and form between them an angle of about forty degrees.
